(19) Europäisches Patentamt
European Patent Office
Office européen des brevets

(11) **EP 3 445 113 A1**

(12) **EUROPEAN PATENT APPLICATION**
published in accordance with Art. 153(4) EPC

(43) Date of publication:
**20.02.2019 Bulletin 2019/08**

(51) Int Cl.:
***H04W 72/04*** (2009.01)

(21) Application number: **17823447.2**

(22) Date of filing: **24.04.2017**

(86) International application number:
**PCT/CN2017/081728**

(87) International publication number:
**WO 2018/006634 (11.01.2018 Gazette 2018/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.07.2016 CN 201610522372**

(71) Applicant: **Huawei Technologies Co., Ltd.**
**Longgang District**
**Shenzhen, Guangdong 518129 (CN)**

(72) Inventors:
• **LIU, Kunpeng**
**Shenzhen**
**Guangdong 518129 (CN)**
• **HUANG, Huang**
**Shenzhen**
**Guangdong 518129 (CN)**
• **ZENG, Kun**
**Shenzhen**
**Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **CHANNEL TRAINING METHOD AND APPARATUS**

(57)    Embodiments of this application provide a channel training method and an apparatus. The channel training method in this application includes: sending, by a base station, channel training period indication information to a mobile station, where the channel training period indication information includes any one of a start time of a channel training period, channel training duration of the channel training period, and an end time of the channel training period, and the channel training period indication information is used by the mobile station to determine a location of the channel training period in a subframe based on the channel training period indication information, to perform channel training within the channel training period. According to the embodiments of this application, resource scheduling overheads required for performing directional beam training can be reduced.

| | |
|---|---|
| A base station sends channel training period indication information to a mobile station | Step 101 |
| The mobile station determines a location of a channel training period in a subframe based on the channel training period indication information | Step 102 |
| The base station sends training information to the mobile station within the channel training period, so that channel training is performed within the channel training period | Step 103 |

FIG. 3

**Description**

**TECHNICAL FIELD**

Embodiments of this application relate to communications technologies, and in particular, to a channel training method and an apparatus.

**BACKGROUND**

Base stations using a 4th generation mobile communication technology (the 4th Generation mobile communication technology, 4G for short) have been commercially used on a large scale. 4G base stations using conventional frequency bands can provide a communication rate greater than hundreds of megabits per second. With a growing requirement for a higher network capacity, base stations using a next generation mobile communication technology (5th generation mobile communication technology, 5G for short) support a communication rate up to gigabits per second, and has an increasingly high requirement on spectrum resources. Spectrum resources at conventional frequency bands are quite limited. Therefore, the 5G technology uses spectrum resources at bands higher than 6 GHz. There are rich spectrum resources at high frequency bands, and gigabit-per-second high-speed radio transmission in a distance of about 100 meters can be supported. Especially at millimeter-wave bands, for example, a 28 GHz frequency band having about 1 GHz available bandwidth, commercially-used indoor access V-bands having about 7 GHz available bandwidth, and E-bands having about 10 GHz available bandwidth, high-speed radio data communication at a peak rate of 10 gigabits per second can be achieved.

Compared with low frequency bands, millimeter-wave bands have greater space loss and a shorter transmission distance at a same transmit power. Therefore, a millimeter-wave communications system usually uses a directional beam to establish communication, to overcome the disadvantage of great space loss. A directional beam pair is obtained through training performed by a base station (base station, BS) and a mobile station (mobile station, MS) by using some time resources. Therefore, the base station needs to allocate, based on scheduling requests of users, time resources used for directional beam training to different users.

**SUMMARY**

Embodiments of this application provide a channel training method and an apparatus, so that a base station can notify a mobile station of an allocated time resource used for performing directional beam training, and scheduling overheads required for scheduling a directional beam training resource can be effectively reduced.

According to a first aspect, an embodiment of this application provides a channel training method, including: sending, by a base station, channel training period indication information to a mobile station, where the channel training period indication information includes any one of a start time of a channel training period, channel training duration of the channel training period, and an end time of the channel training period, and the channel training period indication information is used by the mobile station to determine a location of the channel training period in a subframe or a timeslot based on the channel training period indication information, to perform channel training.

In this implementation, during scheduling of the channel training period, the base station only needs to send, to the mobile station, the channel training period indication information including the start time of the channel training period, the channel training duration of the channel training period, or the end time of the channel training period, so that the base station can notify the mobile station of an allocated time resource used for performing directional beam training, and resource overheads required for scheduling the channel training period can be effectively reduced.

With reference to the first aspect, in a possible implementation of the first aspect, the channel training period includes at least one channel training period, and the method further includes:

allocating, by the base station, the at least one channel training period to the mobile station, where duration of each channel training period in the subframe or the timeslot is preset duration; and

generating, by the base station, the channel training period indication information based on a start time of each channel training period, where the channel training period indication information includes a start time of the at least one channel training period; or

generating, by the base station, the channel training period indication information based on an end time of each channel training period, where the channel training period indication information includes an end time of the at least one channel training period.

In this implementation, during scheduling of the channel training period, the base station only needs to send, to the mobile station, the channel training period indication information including the start time of the at least one channel training period or the end time of the at least one channel training period, so that resource overheads required for scheduling the channel training period can be effectively reduced.

With reference to the first aspect, in a possible implementation of the first aspect, the channel training period includes at least one channel training period, and the method further includes:

allocating, by the base station, the at least one channel training period to the mobile station, where a start time of each channel training period is the same as a start time of the subframe or the timeslot in which the channel training period is included or an end time of a guard period; and

generating, by the base station, the channel training period indication information based on channel training duration of each channel training period, where the channel training period indication information includes channel training duration of the at least one channel training period.

In this implementation, during scheduling of the channel training period, the base station only needs to send, to the mobile station, the channel training period indication information including the channel training duration of the at least one channel training period, so that resource overheads required for scheduling the channel training period can be effectively reduced. Channel training duration of different channel training periods may be different, so that the channel training periods can be scheduled more flexibly.

With reference to the first aspect, in a possible implementation of the first aspect, the channel training period includes at least one channel training period, and the method further includes:

allocating, by the base station, the at least one channel training period to the mobile station, where an end time of each channel training period is the same as an end time of the subframe or the timeslot in which the channel training time is included; and

generating, by the base station, the channel training period indication information based on channel training duration of each channel training period, where the channel training period indication information includes channel training duration of the at least one channel training period.

In this implementation, during scheduling of the channel training period, the base station only needs to send, to the mobile station, the channel training period indication information including the channel training duration of the at least one channel training period, so that resource overheads required for scheduling the channel training period can be effectively reduced. Channel training duration of different channel training periods may be different, so that the channel training periods can be scheduled more flexibly.

With reference to any one of the first aspect or the foregoing possible implementations of the first aspect, in a possible implementation of the first aspect, the method further includes:

sending, by the base station, subframe indication information to the mobile station, where the subframe indication information is used to indicate a location of the subframe or the timeslot in which the at least one channel training period is included.

In this implementation, the base station sends the subframe indication information to the mobile station, so that the base station allocates one channel training period to a subframe or a timeslot corresponding to corresponding subframe information, and the base station can schedule a channel training time more flexibly.

With reference to any one of the first aspect or the foregoing possible implementations of the first aspect, in a possible implementation of the first aspect, the method further includes:

receiving, by the base station, channel state information sent by the mobile station, where the channel state information includes at least one of a receive power, a receive signal-to-noise ratio, and a receive signal to interference plus noise ratio; and

allocating, by the base station based on the channel state information, the channel training period to the mobile station to perform channel training.

With reference to any one of the first aspect or the foregoing possible implementations of the first aspect, in a possible implementation of the first aspect, the method further includes:

receiving, by the base station, channel training request information sent by the mobile station, where the channel training request information is used to indicate that the mobile station needs to perform channel training, and the channel training request information may specifically include identification information of the mobile station; and

allocating, by the base station based on the channel training request information, the channel training period to the mobile station to perform channel training.

According to a second aspect, an embodiment of this application provides a channel training method, including:

receiving, by a mobile station, channel training period indication information sent by a base station, where the channel training period indication information includes any one of a start time of a channel training period, channel training duration of the channel training period, and an end time of the channel training period; and
determining, by the mobile station, a location of the channel training period in a subframe or a timeslot based on the channel training period indication information, to perform channel training.

With reference to the second aspect, in a possible implementation of the second aspect, the channel training period includes at least one channel training period, and if the channel training period indication information includes a start time of the at least one channel training period,
the determining, by the mobile station, a location of the channel training period in a subframe or a timeslot based on the channel training period indication information includes:
determining, by the mobile station, the location of the channel training period in the subframe or the timeslot based on a start time and preset duration of each channel training period.

With reference to the second aspect, in a possible implementation of the second aspect, the channel training period includes at least one channel training period, and if the channel training period indication information includes channel training duration of the at least one channel training period,
the determining, by the mobile station, a location of the channel training period in a subframe or a timeslot based on the channel training period indication information includes:
determining, by the mobile station, the location of the channel training period in the subframe or the timeslot based on channel training duration of each channel training period and a start time of the subframe or the timeslot or an end time of a guard period.

With reference to the second aspect, in a possible implementation of the second aspect, the channel training period includes at least one channel training period, and if the channel training period indication information includes channel training duration of the at least one channel training period,
the determining, by the mobile station, a location of the channel training period in a subframe or a timeslot based on the channel training period indication information includes:
determining, by the mobile station, the location of the channel training period in the subframe or the timeslot based on channel training duration of each channel training period and an end time of the subframe or the timeslot.

With reference to the second aspect, in a possible implementation of the second aspect, the channel training period includes at least one channel training period, and if the channel training period indication information includes an end time of the at least one channel training period,
the determining, by the mobile station, a location of the channel training period in a subframe or a timeslot based on the channel training period indication information includes:
determining, by the mobile station, the location of the channel training period in the subframe or the timeslot based on an end time and preset duration of each channel training period.

With reference to any one of the second aspect or the foregoing possible implementations of the second aspect, in a possible implementation of the second aspect, the method further includes:

receiving, by the mobile station, subframe indication information sent by the base station; and
determining, by the mobile station based on the subframe indication information, a location of the subframe or the timeslot in which the at least one channel training period is included.

According to a third aspect, an embodiment of this application provides a base station, including:
a sending module, configured to send channel training period indication information generated by a processing module to a mobile station, where the channel training period indication information includes any one of a start time of a channel training period, channel training duration of the channel training period, and an end time of the channel training period, and the channel training period indication information is used by the mobile station to determine a location of the channel training period in a subframe or a timeslot based on the channel training period indication information, to perform channel training.

According to a fourth aspect, an embodiment of this application provides a mobile station, including:

a receiving module, configured to receive channel training period indication information sent by a base station, where the channel training period indication information includes any one of a start time of a channel training period, channel training duration of the channel training period, and an end time of the channel training period; and
a processing module, configured to determine a location of the channel training period in a subframe or a timeslot based on the channel training period indication information, to perform channel training.

According to the channel training method and the apparatus in the embodiments of this application, the base station sends the channel training period indication information to the mobile station, where the channel training period indication information includes any one of the start time of the channel training period, the channel training duration of the channel training period, and the end time of the channel training period. The mobile station determines the location of the channel training period in the subframe or the timeslot based on the channel training period indication information. After the base station sends the channel training period indication information to the mobile station, the mobile station can determine the location of the channel training period in the subframe or the timeslot based on the start time of the channel training period and the channel training period indication information. The base station sends training information to the mobile station within the channel training period, so that channel training is performed within the channel training period. Therefore, in the embodiments, during scheduling of the channel training period, the base station only needs to send, to the mobile station, the channel training period indication information including the start time of the channel training period, the channel training duration of the channel training period, or the end time of the channel training period, so that resource overheads required for scheduling the channel training period can be effectively reduced.

**BRIEF DESCRIPTION OF DRAWINGS**

To describe the technical solutions in the embodiments of this application or in the prior art more clearly, the following briefly describes the accompanying drawings required for describing the embodiments or the prior art.

FIG. 1 is a schematic structural diagram of a millimeter-wave radio communications system;
FIG. 2A is a schematic diagram of a frame structure 1 according to this application;
FIG. 2B is a schematic diagram of a frame structure 2 according to this application;
FIG. 3 is a flowchart of a channel training method according to Embodiment 1 of this application;
FIG. 4 is a flowchart of a channel training method according to Embodiment 2 of this application;
FIG. 5A is a schematic diagram of a channel training period in a frame structure 1 according to this application;
FIG. 5B is a schematic diagram of a channel training period in a frame structure 2 according to this application;
FIG. 6A is another schematic diagram of a channel training period in a frame structure 1 according to this application;
FIG. 6B is another schematic diagram of a channel training period in a frame structure 2 according to this application;
FIG. 7 is a flowchart of a channel training method according to Embodiment 3 of this application;
FIG. 8A is still another schematic diagram of a channel training period in a frame structure 1 according to this application;
FIG. 8B is still another schematic diagram of a channel training period in a frame structure 2 according to this application;
FIG. 9 is a flowchart of a channel training method according to Embodiment 4 of this application;
FIG. 10A is still another schematic diagram of a channel training period in a frame structure 1 according to this application;
FIG. 10B is still another schematic diagram of a channel training period in a frame structure 2 according to this application;
FIG. 11 is a schematic structural diagram of a base station according to Embodiment 1 of this application;
FIG. 12 is a schematic structural diagram of a mobile station according to Embodiment 1 of this application;
FIG. 13 is a schematic block diagram of a network element according to another embodiment of this application; and
FIG. 14 is a schematic block diagram of a network element according to another embodiment of this application.

**DESCRIPTION OF EMBODIMENTS**

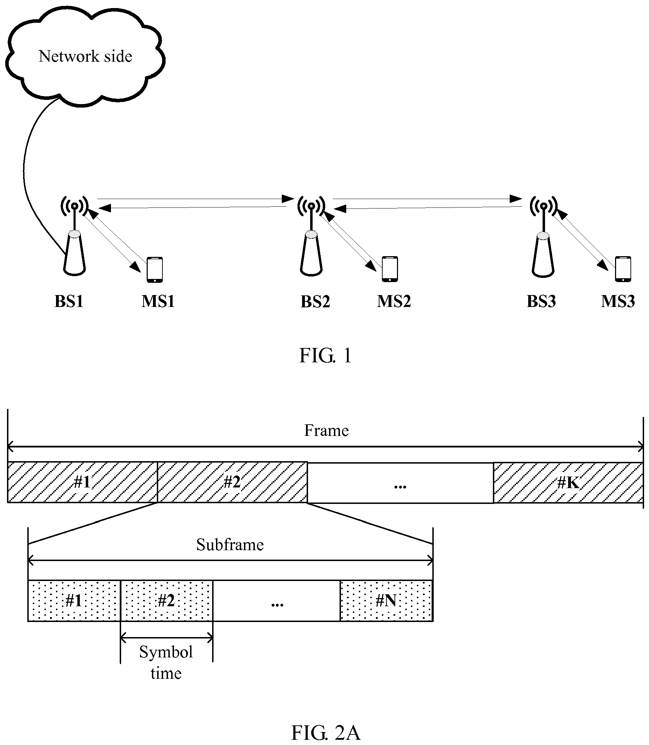

To make the purpose, technical solutions, and advantages of the embodiments of this application clearer, the following clearly and completely describes the technical solutions of the embodiments of this application with reference to the accompanying drawings in the embodiments of this application.
The technical solutions of the embodiments of this application are specifically applied to a millimeter-wave radio communications system. The millimeter-wave mobile communications system includes at least one base station (Base Station, BS for short) and a plurality of mobile stations (Mobile Station, MS for short). The base station may access to a network side (a core network) directly in a wired manner such as by using an optical fiber or access to a network side in a relay manner such as by using another base station. Communication between one base station and another base station and between one base station and a mobile station is performed at a millimeter-wave band. The network side (the core network) may be a core network using 3GPP LTE (long term evolution, Long Term Evolution) or other similar network technologies. FIG. 1 is a schematic structural diagram of a millimeter-wave radio communications system. As shown in FIG. 1, a BS1, a BS2, and a BS3 each cover an area of a specific range. An MS in each area communicates, at a millimeter-wave band, with a base station serving the MS. The BS1 is connected to a network side, and an MS1 within the signal coverage area of the BS1 can establish a connection to the network side by using the BS1. Both the BS2 and the BS3 need to be connected to the network side by using the BS1 as a relay, so as to implement data communication. The BS1 and the MS1, the BS2 and the MS2, and the BS3 and the MS3 all need to determine, through beam training, a directional beam used for establishing a communication connection. In a beam training process, switching between different beams needs to be performed, to perform training. Beam switching is implemented by adjusting a phase of a phase shifter. Some time overheads, usually less than 1 microsecond, are required for adjusting the phase of the phase shifter. After phase adjustment is completed, a period of time is required for signal reception or transmission. A receiver calculates, based on a receive channel, channel state information such as power for receiving a signal, and a signal to noise ratio (signal to noise ratio, SNR) and a signal to interference plus noise ratio (signal to interference noise ratio, SINR) that are of the received signal, to determine beam quality. In the beam training process, usually beam switching and channel reception are performed several times. Therefore, the system allocates a period of time in a frame to perform the beam training (also referred to as channel training). A channel training method in this embodiment of this application may be specifically applied to the base station and the mobile station in the system shown in FIG. 1, so that the BS notifies the MS of a time resource used for channel training, and channel training is performed by using the time resource allocated by the BS. According to the channel training method in this embodiment of this application, in the process in which the BS notifies the MS of the time resource used for channel training, required resource scheduling overheads can be effectively reduced.

The MS in this application may be an access terminal, a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device or another processing device connected to a wireless modem, an in-vehicle device, a wearable device, UE in a future 5G network, or the like.

The BS in this application may be a network-side device configured to communicate with the MS. For example, the BS may be a base transceiver station (Base Transceiver Station, "BTS" for short) in a GSM or CDMA system, may be a NodeB (NodeB, "NB" for short) in a WCDMA system, or may be an evolved NodeB (Evolutional Node B, "eNB" or "eNodeB" for short) in an LTE system. Alternatively, the network device may be a relay node, an access point, an in-vehicle device, a wearable device, a network-side device in a future 5G network, a network-side device in a future evolved PLMN network, or the like.

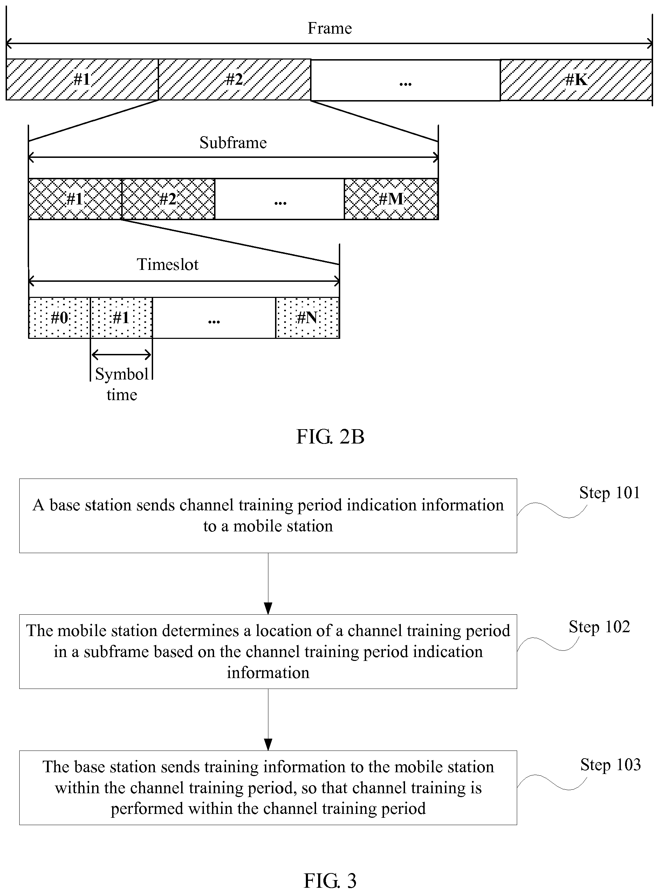

The time resource used for channel training in this embodiment of this application may be specifically in a frame structure shown in FIG. 2A and FIG. 2B. FIG. 2A is a schematic diagram of a frame structure 1 according to this application. Specifically, the frame structure shown in FIG. 2A is a frame structure used in an LTE system. As shown in FIG. 2A, a complete frame includes a plurality of subframes (in FIG. 2A, the frame includes K subframes, where K is an integer greater than or equal to 2). All the subframes have same duration, and each subframe may include a plurality of symbol times (in FIG. 2A, the subframe includes N symbol times, where N is an integer greater than or equal to 2). FIG. 2B is a schematic diagram of a frame structure 2 according to this application. As shown in FIG. 2B, a frame includes a plurality of subframes (in FIG. 2B, the frame includes K subframes, where K is an integer greater than or equal to 2). Each subframe includes a plurality of timeslots (in FIG. 2B, the subframe includes M timeslots, where M is an integer greater than or equal to 2). All the timeslots have same duration, and each timeslot may include a plurality of symbol times (in FIG. 2B, each timeslot includes N symbol times, where K is an integer greater than or equal to 2). In this embodiment of this application, a location allocated to a channel training period (Training period, TP for short) in the frame structure shown in FIG. 2A and the frame structure shown in FIG. 2B are optimized, to effectively reduce, in a process of notifying, by the base station, the mobile station of an allocated time resource used for directional beam training, resource overheads required for scheduling a channel training time. For specific implementations, refer to descriptions of the following embodiments.

FIG. 3 is a flowchart of a channel training method according to Embodiment 1 of this application. As shown in FIG. 3, the method in this embodiment may include the following steps.

Step 101: A base station sends channel training period indication information to a mobile station.

The channel training period indication information includes any one of a start time of a channel training period, channel training duration of the channel training period, and an end time of the channel training period. The channel training period indication information is used by the mobile station to determine a location of the channel training period in a subframe based on the channel training period indication information, to perform channel training within the channel training period. Duration of the subframe is fixed, and duration of a frame including the subframe is fixed. The frame includes a fixed quantity of subframes. A sum of duration of all the subframes in the frame is equal to the duration of the frame. That is, a used frame structure is the frame structure in the embodiment in FIG. 2A.

Step 102: The mobile station determines a location of a channel training period in a subframe based on the channel training period indication information.

Step 103: The base station sends training information to the mobile station within the channel training period, so that channel training is performed within the channel training period.

The training information may specifically include a training sequence, training beam indication information, and control information. The control information may be data transmission scheduling information.

In this embodiment, the base station sends the channel training period indication information to the mobile station, where the channel training period indication information includes any one of the start time of the channel training period, the channel training duration of the channel training period, and the end time of the channel training period. The mobile station determines the location of the channel training period in the subframe based on the channel training period indication information. After the base station sends the channel training period indication information to the mobile station, the mobile station can determine the location of the channel training period in the subframe based on the start time of the channel training period and the channel training period indication information. The base station sends the training information to the mobile station within the channel training period, so that channel training is performed within the channel training period. Therefore, in this embodiment, during scheduling of the channel training period, the base station only needs to send, to the mobile station, the channel training period indication information including the start time of the channel training period, the channel training duration of the channel training period, or the end time of the channel training period, so that resource overheads required for scheduling the channel training period can be effectively reduced.

In the following, several specific embodiments are used to describe in detail the method shown in FIG. 3.

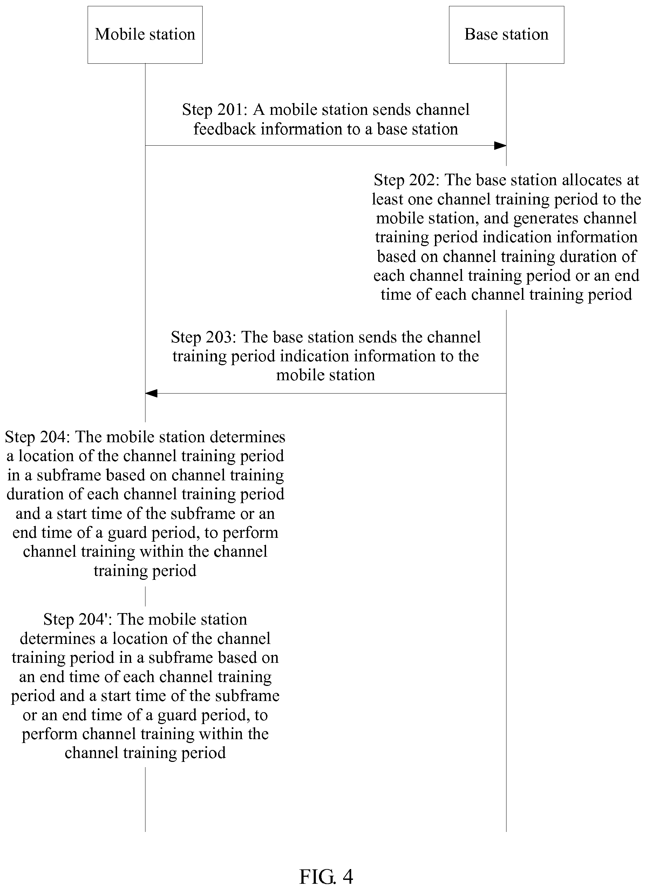

FIG. 4 is a flowchart of a channel training method according to Embodiment 2 of this application. As shown in FIG. 4, the method in this embodiment may include the following steps.

Step 201: A mobile station sends channel feedback information to a base station.

The mobile station sends the channel feedback information to the base station. In one possible implementation, the channel feedback information may be specifically channel state information (Channel state information, CSI for short). The channel state information may include at least one of a receive power, a receive signal-to-noise ratio (Signal to noise ratio, SNR for short), and a receive signal to interference plus noise ratio (Signal to Interference plus Noise Ratio, SINR for short). The base station determines, based on the channel feedback information, whether channel training needs to be performed. When determining that channel training needs to be performed, the base station notifies the mobile station of a location of a channel training period in a subframe by performing the following steps. In another possible implementation, the channel feedback information may be channel training request information. To be specific, the mobile station itself determines, based on the channel state information, whether to perform channel training. When channel training needs to be performed, the mobile station sends the channel training request information to the base station, so that the base station notifies the mobile station of a location of a channel training period in a subframe by performing the following steps.

Step 202: The base station allocates at least one channel training period to the mobile station, and generates channel training period indication information based on channel training duration of each channel training period or an end time of each channel training period.

A start time of each channel training period is the same as a start time of the subframe in which the channel training period is included or an end time of a guard period. The channel training period indication information generated by performing step 202 may specifically include channel training duration of the at least one channel training period. Channel training duration of different channel training periods may be different. In another possible implementation, the channel training period indication information generated by performing step 202 may specifically include an end time of the at least one channel training period.

Specifically, the base station may allocate the channel training period to each subframe, and set a start time of the channel training period in each subframe to be the same as a start time of the subframe or the end time of the guard period (Guard period, GP for short). In other words, the channel training period starts from a start time of a subframe (the start time of the subframe or the end time of the guard period) and lasts for a time equal to the channel training duration. Therefore, when notifying the mobile station of the location of the channel training period in the subframe, the base station may send the end time of the channel training period or the channel training duration to the mobile station, and the mobile station can determine the location of the channel training period in the subframe based on the end time of the channel training period or the channel training duration, to further perform channel training within the channel training period. This can effectively reduce resource overheads required for scheduling a channel training time.

Channel training duration of different channel training periods may be the same or different.

Step 203: The base station sends the channel training period indication information to the mobile station.

If the channel training period indication information includes the channel training duration of the at least one channel training period, step 204 is performed. If the channel training period indication information includes the end time of the at least one channel training period, step 204' is performed.

Step 204: The mobile station determines a location of the channel training period in a subframe based on channel training duration of each channel training period and a start time of the subframe or an end time of a guard period, to perform channel training within the channel training period.

Step 204': The mobile station determines a location of the channel training period in a subframe based on an end time of each channel training period and a start time of the subframe or an end time of a guard period, to perform channel training within the channel training period.

Optionally, the base station may further send subframe indication information to the mobile station. The subframe indication information is used to indicate a location of the subframe in which the at least one channel training period is included. To be specific, different from a manner in which the channel training period is allocated to consecutive different subframes, in an optional implementation, the channel training period may be allocated in inconsecutive subframes. Therefore, the base station may send the subframe indication information to the mobile station, so that the mobile station can know, based on the subframe indication information, subframes to which the channel training period is specifically allocated. For example, the subframe indication information may be a binary number, where 1 may be used to indicate that a subframe corresponding to a bit 1 has the channel training period, and 0 may be used to indicate that a subframe corresponding to a bit 0 does not have the channel training period. The subframe indication information may be 1011110111. The channel training period indication information includes eight pieces of channel training duration, specifically {t1, t2, ..., t8}. The mobile station can know, based on the channel training period indication information and the subframe indication information, that there is no channel training period in subframe 2 and subframe 7, and the channel training duration t1, t2, ..., and t8 of channel training periods are respectively channel training duration of channel training periods in subframe 1, subframe 3, ..., subframe 6, subframe 8, subframe 9, and subframe 10. Therefore, the base station can schedule a channel training time more flexibly.

In this embodiment, the base station receives the channel feedback information sent by the mobile station, and allocates the at least one channel training period to the mobile station. The base station generates the channel training period indication information based on the channel training duration of each channel training period or the end time of each channel training period, where the channel training period indication information may specifically include the channel training duration of the at least one channel training period or the end time of the at least one channel training period. The base station sends the channel training period indication information to the mobile station, so that the mobile station can determine the location of the channel training period in the subframe based on a start time of a frame or the end time of the guard period and the channel training period indication information, where the start time of the channel training period is the same as the start time of the subframe or the end time of the guard period. Therefore, in this embodiment, during scheduling of the channel training period, the base station only needs to send, to the mobile station, the channel training period indication information including the end time of the channel training period or the channel training duration. This can effectively reduce resource overheads required for scheduling the channel training period.

It should be noted that, the subframe in the embodiments of this application may be replaced with a timeslot. If a frame structure in a system is the frame structure shown in FIG. 2A, the channel training period is in a subframe, and resource overheads required for scheduling the channel training period can be reduced in the foregoing manner. If a frame structure in a system is the frame structure shown in FIG. 2B, the channel training period is in a timeslot. The subframe in the technical solution shown in FIG. 4 may be replaced with the timeslot, and resource overheads required for scheduling the channel training period can also be reduced.

In the following, two specific embodiments are used to describe in detail the technical solution of the method embodiment shown in FIG. 4.

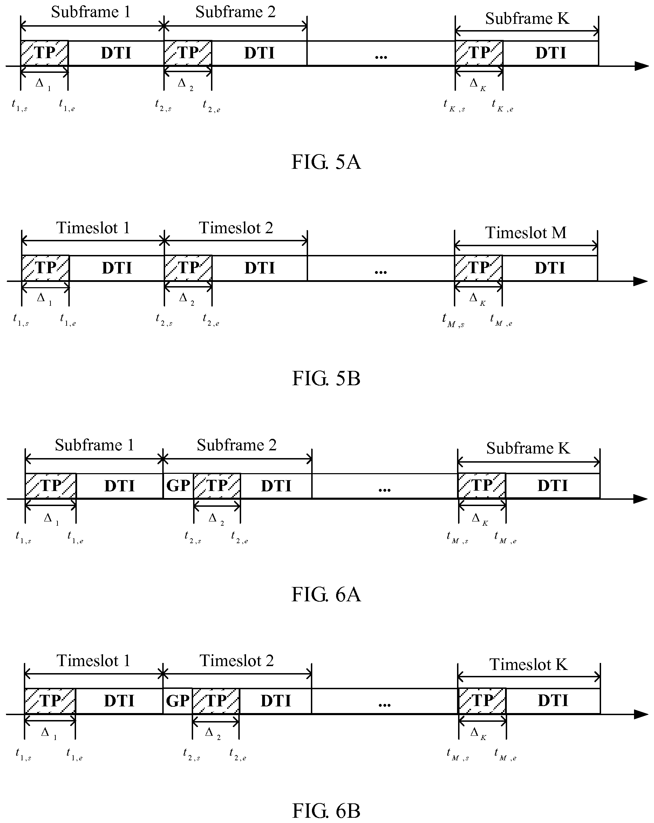

FIG. 5A is a schematic diagram of a channel training period in a frame structure 1 according to this application. FIG. 5B is a schematic diagram of a channel training period in a frame structure 2 according to this application. A start time of a channel training period in FIG. 5A and FIG. 5B is specifically the same as a start time of a subframe (or a timeslot). As shown in FIG. 5A, each frame includes K subframes, and each subframe includes two parts: One part is a channel training period (TP), and the other part is data transmission interval (Data Transition Time, DTI for short). Duration of a subframe does not vary with duration of the channel training period. In other words, if the channel training period increases, the data transmission interval is reduced correspondingly. A channel training period (TP) of a subframe $k$ ($k = 1,2,...,K$) is determined based on a start time $t_{k,s}$ of the channel training period, channel training duration $\Delta_k$, and an end time $t_{k,e}$ of the channel training period. $t_{k,s}$, $\Delta_k$, and $t_{k,e}$ make the relationship shown in the following formula (1) true:

$$t_{k,e} = t_{k,s} + \Delta_k, \text{ where } k = 1,2,\cdots,K. \qquad (1)$$

It can be easily learned from the formula that, a third value can be determined if two of $t_{k,s}$, $\Delta_k$, and $t_{k,e}$ are given. It should be understood that, after an MS is connected to a system, the MS has completed time synchronization (the time synchronization includes frame synchronization and sampling synchronization) between the MS and a BS, and the MS already knows a start time of each subframe. The MS first feeds back CSI or channel training request information to the BS. The CSI may be a receive power, a receive signal-to-noise ratio, a receive signal to interference plus noise ratio, or the like of the BS. The BS allocates, based on the feedback of the MS, the channel training period (TP) to a start part of each subframe, and the start time of the subframe is consistent with a start time of the channel training time. Therefore, the BS only needs to notify the MS of the channel training duration $\Delta_k$ or the end time $t_{k,e}$, and the MS can determine all of the start time $t_{k,s}$, the channel training duration $\Delta_k$, and the end time $t_{k,e}$ of the channel training period (TP). This can reduce transfer overheads used for notifying the MS of the channel training period (TP) indication information. It should be noted that, the channel training period includes a plurality of transmission symbol times, and each symbol is corresponding to one time point. The end time of the channel training period may be represented by using a last symbol time in the channel training period, or may be represented by using a first transmission symbol time in the DTI. The channel training duration $\Delta_k$ may be indicated by using a quantity of channel training times. Channel training duration allocated to different subframes may be the same or may be different. The MS determines, based on a scheduling indication, whether a time in the subframe is used for channel training or data transmission.

As shown in FIG. 5B, FIG. 5B shows that a channel training period is allocated to a start part of each timeslot. Specifically, each timeslot includes two parts: One part is a channel training period (TP), and the other part is a data transmission interval (DTI). Duration of the timeslot does not vary with duration of the channel training period. In other words, if the channel training period increases, the corresponding data transmission interval is reduced. The timeslot is used to replace the subframe in FIG. 5A. A start time $t_{k,s}$ of the channel training period, channel training duration $\Delta_k$, and an end time $t_{k,e}$ of the channel training period in the timeslot also make the relationship in formula (1) true. The BS may use a same manner as that in the embodiment shown in FIG. 5A. That is, the BS only needs to notify the MS of the channel training duration $\Delta_k$ or the end time $t_{k,e}$, and the MS can determine all of the start time $t_{k,s}$, the channel training duration $\Delta_k$, and the end time $t_{k,e}$ of the channel training period (TP). This can reduce transfer overheads used for notifying the MS of the channel training period (TP) indication information.

In this embodiment, the MS feeds back the CSI or the channel training request information to the BS, where the CSI may be the receive power, the receive signal-to-noise ratio, the receive signal to interference plus noise ratio, or the like of the BS. The BS allocates, based on the feedback of the MS, the channel training period (TP) to the start part of each subframe (or each timeslot), where the start time of the subframe (or the timeslot) is consistent with the start time of the channel training time. Then, the BS only needs to notify the MS of the channel training duration $\Delta_k$ or the end time $t_{k,e}$, and the MS can determine all of the start time $t_{k,s}$, the channel training duration $\Delta_k$, and the end time $t_{k,e}$ of the channel training period (TP). This can reduce transfer overheads used for notifying the MS of the channel training period (TP) indication information.

In the embodiments in FIG. 5A and FIG. 5B, the start time of the channel training period is the same as the start time of the subframe (or timeslot). Different from the embodiments in FIG. 5A and FIG. 5B, a start time of a channel training period in embodiments shown in FIG. 6A and FIG. 6B may be the same as an end time of a guard period. For details, refer to descriptions of the following embodiments shown in FIG. 6A and FIG. 6B.

FIG. 6A is another schematic diagram of a channel training period in a frame structure 1 according to this application. FIG. 6B is another schematic diagram of a channel training period in a frame structure 2 according to this application. As shown in FIG. 6A, on a basis of the embodiment shown in FIG. 5A, a new embodiment is provided in this embodiment. Specifically, in a time division duplex (Time Division Duplex, TDD) system, when consecutive subframes are used to serve a same MS, the MS may be in different states in two adjacent subframes. For example, in subframe 1, the MS is in a reception state (downlink), and in subframe 2, the MS is in a transmission state (uplink). At a start point of subframe 2, the MS switches from the reception state to the transmission state. It takes some time for the MS to switch from the reception state to the transmission state. Therefore, a guard period (Guard Period, GP) needs to be reserved for the MS to switch from the reception state to the transmission state. The GP may also be used for beam switching. Reception and transmission switching needs to be completed before channel training starts. Therefore, as shown by subframe 2 in FIG. 6A, the guard period (GP) is placed at a start part of subframe 2, followed by the channel training period (TP). However, total duration of the subframe remains unchanged. In the TDD system, duration of the GP is usually fixed. Both the MS and a BS know that, if a start time of the channel training period is kept consistent with an end time of the GP in this case, the BS may similarly transfer only a channel training time duration $\Delta_k$ or an end time $t_{k,e}$ to the MS, and the MS can determine a location of the channel training period in the subframe. $t_{gp,s}$, $t_{gp,e}$, and $\Delta_{gp}$ indicate a start time, the end time, and duration of the GP, respectively. Then, a start time $t_{2,s}$ of a channel training period and an end time $t_{2,e}$ of the channel training period in subframe 2 make the following formula (2) true:

$$t_{2,e} = t_{gp,s} + \Delta_{gp} + \Delta_2$$
$$t_{2,s} = t_{2,e} - (t_{gp,s} + \Delta_{gp}) \qquad (2)$$

Similar to FIG. 6A, a start time of a channel training period in FIG. 6B is also the same as an end time of a GP. Different from FIG. 6A, a frame structure used in FIG. 6B is the frame structure 2. Each subframe further includes a plurality of timeslots. GP is placed at a start point of a timeslot, and the start time of the channel training period is the same as the end time of the GP. A start time $t_{2,s}$ of a channel training period and an end time $t_{2,e}$ of the channel training period in the GP also make the formula (2) true, and details are not described herein.

In this embodiment, in the TDD system, when consecutive subframes (or timeslots) are used to serve a same MS, the MS may be in different states in two adjacent subframes (or timeslots). The guard period (GP) needs to be reserved between two adjacent subframes (or timeslots), and the start time of the channel training period is kept consistent with the end time of the GP. Therefore, the BS only needs to transfer channel training time duration $\Delta_k$ or an end time $t_{k,e}$ to the MS, and the MS can determine the location of the channel training period in the subframe. This can effectively reduce resource overheads required for scheduling the channel training period.

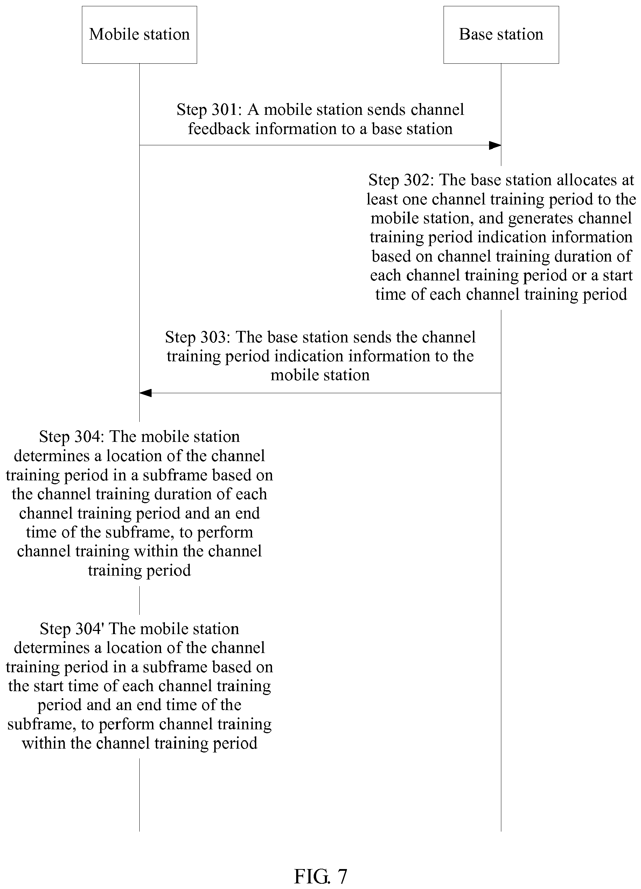

In the embodiments shown in FIG. 4 and FIG. 5A to FIG. 6B, the channel training period is allocated to the start part of the subframe (or the timeslot). Different from that manner, in the embodiments shown in FIG. 7 and FIG. 8A to FIG. 9B, a channel training period is allocated to an end part of a subframe (or a timeslot). For details, refer to descriptions of the following embodiments.

FIG. 7 is a flowchart of a channel training method according to Embodiment 3 of this application. As shown in FIG. 7, the method in this embodiment may include the following steps.

Step 301: A mobile station sends channel feedback information to a base station.

For specific descriptions of step 301, refer to step 201. Details are not described herein.

Step 302: The base station allocates at least one channel training period to the mobile station, and generates channel training period indication information based on channel training duration of each channel training period or a start time of each channel training period.

An end time of each channel training period is the same as an end time of a subframe in which the channel training period is included. The channel training period indication information generated by performing step 302 may specifically include channel training duration of the at least one channel training period. Channel training duration of different channel training periods may be different. In another possible implementation, the channel training period indication information generated by performing step 302 may specifically include a start time of the at least one channel training period.

Specifically, the base station allocates the channel training period to an end part of each subframe, that is, the end time of the channel training period is the same as an end time of the subframe. When notifying the mobile station of a location of the channel training period in a subframe, the base station may send the start time of the channel training period or the channel training duration to the mobile station, and the mobile station can determine, based on the start time of the channel training period or the channel training duration, the location of the channel training period in the subframe, to perform channel training within the channel training period. This can effectively reduce resource overheads required for scheduling a channel training time.

Step 303: The base station sends the channel training period indication information to the mobile station.

If the channel training period indication information includes the channel training duration of the at least one channel training period, step 304 is performed. If the channel training period indication information includes an end time of the at least one channel training period, step 304' is performed.

Step 304: The mobile station determines a location of the channel training period in a subframe based on the channel training duration of each channel training period and an end time of the subframe, to perform channel training within the channel training period.

Step 304': The mobile station determines a location of the channel training period in a subframe based on the start time of each channel training period and an end time of the subframe, to perform channel training within the channel training period.

Optionally, the base station may further send subframe indication information to the mobile station. The subframe indication information is used to indicate a location of the subframe in which the at least one channel training period is included. For specific descriptions, refer to specific descriptions of the subframe indication information in the embodiment shown in FIG. 4. Details are not described herein.

In this embodiment, the base station determines the channel training period indication information based on the channel feedback information sent by the mobile station, where the channel training period indication information may include either of the start time of the channel training period and the channel training duration. The base station sends the channel training period indication information to the mobile station. The mobile station can determine the location of the channel training period in the subframe based on the end time of the subframe and the channel training period indication information. Therefore, in this embodiment, during scheduling of the channel training period, the base station only needs to send, to the mobile station, the channel training period indication information including the start time of the channel training period or the channel training duration, so that resource overheads required for scheduling the channel training period can be effectively reduced.

In the following, two specific embodiments are used to describe in detail the technical solution of the method embodiment shown in FIG. 7.

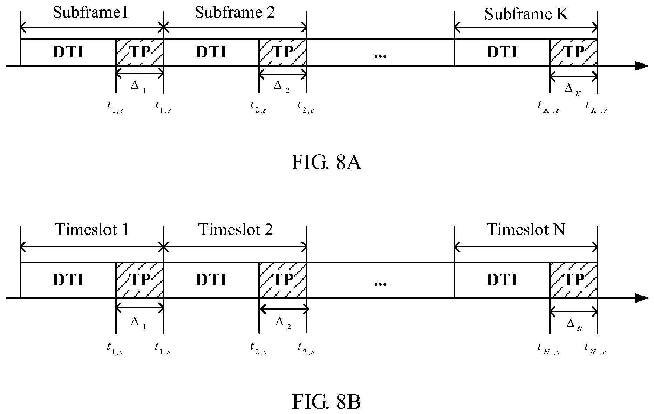

FIG. 8A is still another schematic diagram of a channel training period in a frame structure 1 according to this application. FIG. 8B is still another schematic diagram of a channel training period in a frame structure 2 according to this application. An end time of a channel training period in FIG. 8A and FIG. 8B is specifically the same as an end time of a subframe (or a timeslot). As shown in FIG. 8A, each frame includes K subframes (where K is greater than or equal to 2). Each subframe includes two parts: a channel training period (TP) and a data transmission interval (DTI). A sum of duration of the two parts is equal to duration of a complete subframe. Duration of the subframe is fixed. In other words, if the channel training period increases, the data transmission interval is reduced correspondingly. A channel training period (TP) of a subframe k ($k = 1,2,\cdots,K$) is determined based on a start time $t_{k,s}$ of the channel training period, channel training duration $\Delta_k$, and an end time $t_{k,e}$ of the channel training period. $t_{k,s}$, $\Delta_k$, and $t_{k,e}$ also make the relationship shown in formula (1) true. Likewise, a third parameter value can be determined provided that two of the parameter values $t_{k,s}$, $\Delta_k$, and $t_{k,e}$ are given. After an MS is connected to a system, the MS has completed time synchronization (the time synchronization includes frame synchronization and sampling synchronization) between the MS and a BS, and the MS already knows an end time of each subframe. The MS first feeds back CSI or channel training request information to the BS. The CSI may be a receive power, a receive signal-to-noise ratio, a receive signal to interference plus noise ratio, or the like of the BS. The BS allocates the channel training period (TP) to an end part of each subframe based on the feedback of the MS, and keeps the end time of the channel training period consistent with the end time of the subframe. Therefore, the BS only needs to notify the MS of the channel training duration $\Delta_k$ or the start time $t_{k,s}$ of the channel training period, and the MS can determine all of the start time $t_{k,s}$ of the channel training period, the channel training duration $\Delta_k$, and the end time $t_{k,e}$ of the channel training period. This can reduce transfer overheads used for notifying the MS of channel training period indication information by the BS. It should be noted that, the channel training period includes a plurality of transmission symbol times, and each symbol is corresponding to one time point. The start time of the channel training period may be represented by using a first symbol time in the channel training period, or may be represented by using a last transmission symbol time in the DTI. The channel training duration $\Delta_k$ may be indicated by using a quantity of channel training times. Channel training duration allocated to different subframes may be the same or may be different. The MS determines, based on a scheduling indication, whether a time in the subframe is used for channel training or data transmission.

As shown in FIG. 8B, FIG. 8B shows that a channel training period is allocated to an end part of each timeslot. Specifically, each timeslot includes two parts: One part is a channel training period (TP), and the other part is a data transmission interval (DTI). Duration of the timeslot does not vary with duration of the channel training period. In other words, if the channel training period increases, the corresponding data transmission interval is reduced. The timeslot is used to replace the subframe in FIG. 8A. A start time $t_{k,s}$ of the channel training period, channel training duration $\Delta_k$, and an end time $t_{k,e}$ of the channel training period in the timeslot also make the relationship in formula (1) true. The BS may use a same manner as that in the embodiment shown in FIG. 8A. That is, the BS only needs to notify the MS of the channel training duration $\Delta_k$ or the start time $t_{k,e}$, and the MS can determine all of the start time $t_{k,s}$, the channel training duration $\Delta_k$, and the end time $t_{k,e}$ of the channel training period (TP). This can reduce transfer overheads used for notifying the MS of the channel training period (TP) indication information.

In this embodiment, the MS feeds back the CSI or the channel training request information to the BS, where the CSI may be the receive power, the receive signal-to-noise ratio, the receive signal to interference plus noise ratio, or the like of the BS. The BS allocates, based on the feedback of the MS, the channel training period (TP) to the end part of each subframe (or timeslot), where the start time of the channel training time is consistent with the end time of the subframe (or the timeslot). The BS only needs to notify the MS of the channel training duration $\Delta_k$ or the end time $t_{k,e}$, and the MS can determine all of the start time $t_{k,s}$, the channel training duration $\Delta_k$, and the end time $t_{k,e}$ of the channel training period (TP). This can reduce transfer overheads used for notifying the MS of the channel training period (TP) indication information.

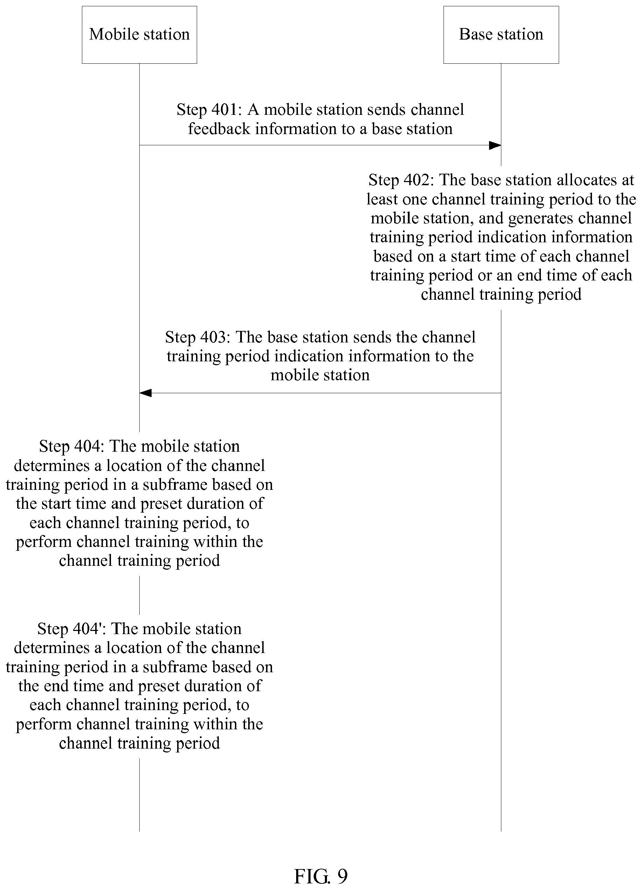

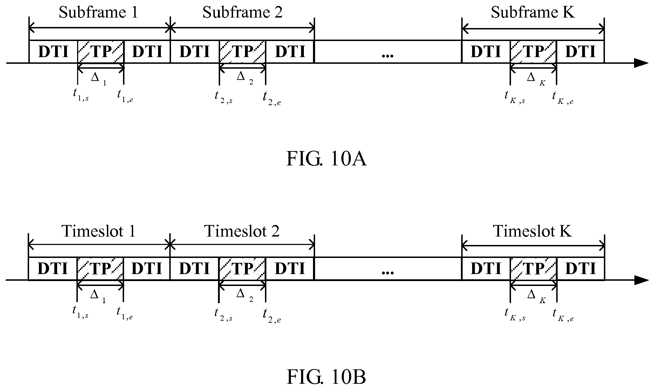

In the embodiments shown in FIG. 4 and FIG. 5A to FIG. 6B, the channel training period is allocated to the start part of the subframe (or the timeslot). In the embodiments shown in FIG. 7, FIG. 8A, and FIG. 8B, the channel training period is allocated to the end part of the subframe (or the timeslot). Different from that manner, in embodiments shown in FIG. 9, FIG. 10A, and FIG. 10B, a channel training period is allocated to an intermediate part of a subframe (or a timeslot). All channel training periods have same channel training duration. For details, refer to descriptions of the following embodiments.

FIG. 9 is a flowchart of a channel training method according to Embodiment 4 of this application. As shown in FIG. 9, the method in this embodiment may include the following steps.

Step 401: A mobile station sends channel feedback information to a base station.

For specific descriptions of step 401, refer to specific descriptions of step 201. Details are not described herein.

Step 402: The base station allocates at least one channel training period to the mobile station, and generates channel training period indication information based on a start time of each channel training period or an end time of each channel training period.

Duration of each channel training period in a subframe is preset duration. The channel training period indication information generated by performing step 402 may specifically include a start time of the at least one channel training period or an end time of the at least one channel training period.

Specifically, the base station may allocate the channel training period to each subframe, and set training duration of the channel training periods in all the subframes to be the same, that is, set channel training periods with same duration. The mobile station only needs to know the start time or the end time of the channel training time in each subframe, and then can determine a location of each channel training period in the subframe with reference to the preset duration. This can effectively reduce resource overheads required for scheduling a channel training time.

Step 403: The base station sends the channel training period indication information to the mobile station.

If the channel training period indication information includes the start time of the at least one channel training period, step 404 is performed. If the channel training period indication information includes the end time of the at least one channel training period, step 404' is performed.

Step 404: The mobile station determines a location of the channel training period in a subframe based on the start time and preset duration of each channel training period, to perform channel training within the channel training period.

Step 404: The mobile station determines a location of the channel training period in a subframe based on the end time and preset duration of each channel training period, to perform channel training within the channel training period.

Optionally, the base station may further send subframe indication information to the mobile station. The subframe indication information is used to indicate a location of the subframe in which the at least one channel training period is included. For specific descriptions, refer to specific descriptions of the subframe indication information in the embodiment shown in FIG. 4. Details are not described herein.

In this embodiment, the base station receives the channel feedback information sent by the mobile station, and allocates the at least one channel training period to the mobile station. The base station generates the channel training period indication information based on the start time of each channel training period or the end time of each channel training period, where the channel training period indication information may specifically include the start time of the at least one channel training period or the end time of the at least one channel training period. The base station sends the channel training period indication information to the mobile station, so that the mobile station can determine the location of the channel training period in the subframe based on the channel training period indication information and the preset duration. Therefore, in this embodiment, during scheduling of the channel training period, the base station only needs to send, to the mobile station, the channel training period indication information including the start time of the at least one channel training period or the end time of the at least one channel training period. This can effectively reduce resource overheads required for scheduling the channel training period.

In the following, a specific embodiment is used to describe in detail the technical solution of the method embodiment shown in FIG. 9.

FIG. 10A is still another schematic diagram of a channel training period in a frame structure 1 according to this application. FIG. 10B is still another schematic diagram of a channel training period in a frame structure 2 according to this application. Channel training duration of the channel training periods in FIG. 10A and FIG. 10B is the same. As shown in FIG. 10A, each frame includes K subframes (where K is greater than or equal to 2). Each subframe includes two parts: a channel training period (TP) and a data transmission interval (DTI). A sum of duration of the two parts is equal to duration of a complete subframe. Duration of the subframe is fixed. In other words, if the channel training period increases, the data transmission interval is reduced correspondingly. The DTI may be divided into two parts, and the two parts are respectively located on two sides of the channel training period (TP). A channel training period (TP) of a subframe k ($k = 1,2,\cdots,K$) is determined based on a start time $t_{k,s}$ of the channel training period, channel training duration $\Delta_k$, and an end time $t_{k,e}$ of the channel training period. $t_{k,s}$, $\Delta_k$, and $t_{k,e}$ also make the relationship shown in formula (1) true. Likewise, a third parameter value can be determined provided that two of the parameter values $t_{k,s}$, $\Delta_k$, and $t_{k,e}$ are given. In this embodiment, duration of the TPs in all the subframes is the same, that is, $\Delta_1 = \Delta_2 = \cdots = \Delta_k$. Therefore, provided that the start time or the end time of the channel training period are given, the channel training period can be determined, that is, all of the start time of the channel training period, the channel training duration of the channel training period, and the end time of the channel training period can be determined.

As shown in FIG. 10B, FIG. 10B shows that a channel training period is allocated to an intermediate part of each timeslot. Specifically, each timeslot includes two parts: One part is a channel training period (TP), and the other part is a data transmission interval (DTI). Duration of the timeslot does not vary with duration of the channel training period. In other words, if the channel training period increases, the corresponding data transmission interval is reduced. The DTI may be divided into two parts, and the two parts are respectively located on two sides of the channel training period (TP). The timeslot is used to replace the subframe in FIG. 10A. A start time $t_{k,s}$ of the channel training period, channel training duration $\Delta_k$, and an end time $t_{k,e}$ of the channel training period in the timeslot also make the relationship in formula (1) true. In this embodiment, duration of the TPs in all the timeslots is the same, that is, $\Delta_1 = \Delta_2 = \cdots = \Delta_k$. The BS may use a same manner as that in the embodiment shown in FIG. 10A. That is, the BS only needs to notify the MS of the start time $t_{k,s}$ or the end time $t_{k,e}$ of the channel training period, and the MS can determine all of the start time $t_{k,s}$, the channel training duration $\Delta_k$, and the end time $t_{k,e}$ of the channel training period (TP). This can reduce transfer overheads used for notifying the MS of channel training period (TP) indication information.

In this embodiment, the MS feeds back CSI or channel training request information to the BS, where the CSI may be a receive power, a receive signal-to-noise ratio, a receive signal to interference plus noise ratio, or the like of the BS. The BS allocates, based on the feedback of the MS, the channel training period (TP) to the intermediate part of each subframe (or timeslot), where duration of the TPs in all the timeslots is the same. The BS only needs to notify the MS of the start time $t_{k,s}$ or the end time $t_{k,e}$ of the channel training period (TP), and the MS can determine all of the start time $t_{k,s}$, the channel training duration $\Delta_k$, and the end time $t_{k,e}$ of the channel training period (TP). This can reduce transfer overheads used for notifying the MS of the channel training period (TP) indication information.

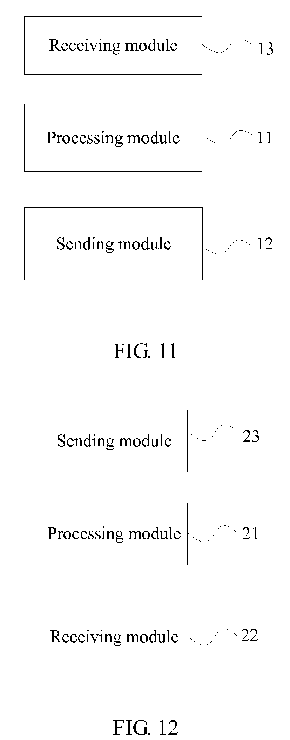

FIG. 11 is a schematic structural diagram of a base station according to Embodiment 1 of this application. As shown in FIG. 11, the apparatus in this embodiment may include a processing module 11, a sending module 12, and a receiving module 13. The sending module 12 is configured to send channel training period indication information generated by the processing module 11 to a mobile station, where the channel training period indication information includes any one of a start time of a channel training period, channel training duration of the channel training period, and an end time of the channel training period, and the channel training period indication information is used by the mobile station to determine a location of the channel training period in a subframe based on the channel training period indication information, to perform channel training within the channel training period.

Duration of the subframe is fixed, and duration of a frame including the subframe is fixed. The frame includes a fixed quantity of subframes. A sum of duration of all the subframes in the frame is equal to the duration of the frame.

Optionally, the channel training period includes at least one channel training period, and the processing module 11 is specifically configured to allocate the at least one channel training period to the mobile station, where duration of each channel training period in the subframe is preset duration; and

generate the channel training period indication information based on a start time of each channel training period, where the channel training period indication information includes a start time of the at least one channel training period; or generate the channel training period indication information based on an end time of each channel training period, where the channel training period indication information includes an end time of the at least one channel training period.

Optionally, the channel training period includes at least one channel training period, and the processing module 11 is specifically configured to: allocate the at least one channel training period to the mobile station, where a start time of each channel training period is the same as a start time of the subframe in which the channel training period is included or an end time of a guard period; and generate the channel training period indication information based on channel training duration of each channel training period, where the channel training period indication information includes channel training duration of the at least one channel training period.

Optionally, the channel training period includes at least one channel training period, and the processing module 11 is specifically configured to: allocate the at least one channel training period to the mobile station, where an end time of each channel training period is the same as an end time of the subframe in which the channel training time is included; and generate the channel training period indication information based on channel training duration of each channel training period, where the channel training period indication information includes channel training duration of the at least one channel training period.

Optionally, the sending module 12 is further configured to send subframe indication information to the mobile station, where the subframe indication information is used to indicate a location of the subframe in which the at least one channel training period is included.

Optionally, the receiving module 13 is configured to receive channel state information sent by the mobile station, where the channel state information includes at least one of a receive power, a receive signal-to-noise ratio, and a receive signal to interference plus noise ratio. The processing module 13 is further configured to allocate, based on the channel state information, the channel training period to the mobile station to perform channel training.

Optionally, the receiving module 13 is configured to receive channel training request information sent by the mobile station, where the channel training request information is used to indicate that the mobile station needs to perform channel training. The processing module 11 is further configured to allocate, based on the channel training request information, the channel training period to the mobile station to perform channel training.

The apparatus in this embodiment may be configured to execute the technical solution in the foregoing method embodiment. Specific descriptions of the method embodiment are also applicable to the apparatus in this embodiment. Implementation principles and technical effects thereof are similar to those in the method embodiment, and details are not described herein.

FIG. 12 is a schematic structural diagram of a mobile station according to Embodiment 1 of this application. As shown in FIG. 12, the apparatus in this embodiment may include a processing module 21, a receiving module 22, and a sending module 23. The receiving module 22 is configured to receive channel training period indication information sent by a base station, where the channel training period indication information includes any one of a start time of a channel training period, channel training duration of the channel training period, and an end time of the channel training period. The processing module 21 is configured to determine a location of the channel training period in a subframe based on the channel training period indication information, to perform channel training within the channel training period.

Duration of the subframe is fixed, and duration of a frame including the subframe is fixed. The frame includes a fixed quantity of subframes. A sum of duration of all the subframes in the frame is equal to the duration of the frame.

Optionally, the channel training period includes at least one channel training period, and if the channel training period indication information includes a start time of the at least one channel training period,
that the processing module 21 is configured to determine a location of the channel training period in a subframe based on the channel training period indication information includes: determining the location of the channel training period in the subframe based on a start time and preset duration of each channel training period.

Optionally, the channel training period includes at least one channel training period, and if the channel training period indication information includes channel training duration of the at least one channel training period,
that the processing module 21 is configured to determine a location of the channel training period in a subframe based on the channel training period indication information includes: determining the location of the channel training period in the subframe based on channel training duration of each channel training period and a start time of the subframe or an end time of a guard period.

Optionally, the channel training period includes at least one channel training period, and if the channel training period indication information includes channel training duration of the at least one channel training period,
that the processing module 21 is configured to determine a location of the channel training period in a subframe based on the channel training period indication information includes: determining the location of the channel training period in the subframe based on channel training duration of each channel training period and an end time of the subframe.

Optionally, the channel training period includes at least one channel training period, and if the channel training period indication information includes an end time of the at least one channel training period,
that the processing module 21 is configured to determine a location of the channel training period in a subframe based on the channel training period indication information includes: determining the location of the channel training period in the subframe based on an end time and preset duration of each channel training period.

Optionally, the receiving module 22 is further configured to receive subframe indication information sent by the base station; and
the processing module is further configured to determine, based on the subframe indication information, a location of the subframe in which the at least one channel training period is included.

Optionally, the sending module 23 is configured to send channel state information to the base station, where the channel state information includes at least one of a receive power, a receive signal-to-noise ratio, and a receive signal to interference plus noise ratio, and the channel state information is used by the base station to allocate, based on the channel state information, the channel training period to the mobile station to perform channel training.

Optionally, the sending module 23 is configured to send channel training request information to the base station, where the channel training request information is used by the base station to allocate, based on the channel training request information, the channel training period to the mobile station to perform channel training.

The apparatus in this embodiment may be configured to execute the technical solution in the foregoing method embodiment. Specific descriptions of the method embodiment are also applicable to the apparatus in this embodiment. Implementation principles and technical effects thereof are similar to those in the method embodiment, and details are not described herein.

It should be noted that, the receiving module 13 in the embodiment of this application may be corresponding to a receiver of a base station or a transceiver of a base station. The sending module 12 may be corresponding to a transmitter of the base station or the transceiver of the base station. The processing module 11 may be corresponding to a processor of the base station. The processor herein may be a central processing unit (Central Processing Unit, CPU), an application-specific integrated circuit (Application Specific Integrated Circuit, ASIC), or one or more integrated circuits implementing this embodiment of this application. The base station may further include a memory. The memory is configured to store instruction code. The processor invokes the instruction code in the memory, to control the receiving module 13 and the sending module 12 in the embodiment of this application to perform the foregoing operations.

The sending module 23 in the embodiment of this application may be corresponding to a transmitter of a mobile station or a transceiver of a mobile station. The receiving module 22 may be corresponding to a receiver of the mobile station or the transceiver of the mobile station. The processing module 21 may be corresponding to a processor of the mobile station. The processor herein may be a CPU, an ASIC, or one or more integrated circuits implementing this embodiment of this application. The mobile station may further include a memory. The memory is configured to store instruction code. The processor invokes the instruction code in the memory, to control the sending module 23 and the receiving module 22 in the embodiment of this application to perform the foregoing operations.

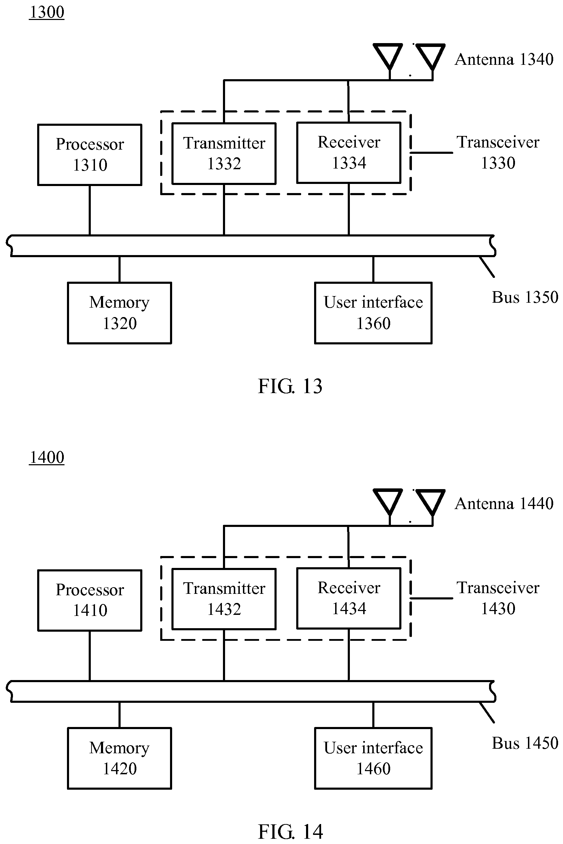

FIG. 13 is a schematic block diagram of a network element according to another embodiment of this application. The network element 1300 includes a processor 1310, a memory 1320, a transceiver 1330, an antenna 1340, a bus 1350, and a user interface 1360.

Specifically, the processor 1310 controls an operation of the network element 1300. The processor may be a general purpose processor, a digital signal processor, an application-specific integrated circuit, a field programmable gate array, or another programmable logic device.

The transceiver 1330 includes a transmitter 1332 and a receiver 1334. The transmitter 1332 is configured to transmit a signal, and the receiver 1334 is configured to receive a signal. There may be one or more antennas 1340. The network element 1300 may further include the user interface 1360 such as a keyboard, a microphone, a loudspeaker, and/or a touchscreen. The user interface 1360 may transfer content and a control operation to the network element 1300.

Components of the network element 1300 are coupled together by using the bus 1350. In addition to a data bus, the bus system 1350 further includes a power bus, a control bus, and a status signal bus. However, for clear description, various buses are marked as the bus system 1350 in the figure. It should be noted that the descriptions of the network element structure may be applied to this embodiment of this application.

The memory 1320 may include a read-only memory (Read Only Memory, ROM), a random access memory (Random Access Memory, RAM), another type of dynamic memory device that can store information and an instruction, or a magnetic disk memory. The memory 1320 may be configured to store an instruction used to implement the related method provided in the embodiment of this application. It can be understood that the executable instruction may be programmed or loaded to at least one of the processor 1310 of the network element 1300, a buffer, and a cache.

In a specific embodiment, the memory is configured to store computer executable program code. When the program code includes an instruction, and the processor executes the instruction, the instruction causes the network element to perform the following operation:

sending channel training period indication information to a mobile station, where the channel training period indication information includes any one of a start time of a channel training period, channel training duration of the channel training period, and an end time of the channel training period, and the channel training period indication information is used by the mobile station to determine a location of the channel training period in a subframe based on the channel training period indication information, to perform channel training within the channel training period.

Duration of the subframe is fixed, and duration of a frame including the subframe is fixed. The frame includes a fixed quantity of subframes. A sum of duration of all the subframes in the frame is equal to the duration of the frame.

For a specific implementation of the operation performed by the processor included in the network element serving as the BS, refer to a corresponding step performed by the BS in the apparatus embodiment. Details are not described in this embodiment of this application.

FIG. 14 is a schematic block diagram of a network element according to another embodiment of this application. The network element 1400 includes a processor 1410, a memory 1420, a transceiver 1430, an antenna 1440, a bus 1450, and a user interface 1460.

Specifically, the processor 1410 controls an operation of the network element 1400. The processor may be a general purpose processor, a digital signal processor, an application-specific integrated circuit, a field programmable gate array, or another programmable logic device.

The transceiver 1430 includes a transmitter 1432 and a receiver 1434. The transmitter 1432 is configured to transmit a signal, and the receiver 1434 is configured to receive a signal. There may be one or more antennas 1440. The network element 1400 may further include the user interface 1460 such as a keyboard, a microphone, a loudspeaker, and/or a touchscreen. The user interface 1460 may transfer content and a control operation to the network element 1400.

Components of the network element 1400 are coupled together by using the bus 1450. In addition to a data bus, the bus system 1450 further includes a power bus, a control bus, and a status signal bus. However, for clear description, various buses are marked as the bus system 1450 in the figure. It should be noted that the descriptions of the network element structure may be applied to this embodiment of this application.

The memory 1420 may include a read only memory (Read Only Memory, ROM), a random access memory (Random Access Memory, RAM), another type of dynamic memory device that can store information and an instruction, or a magnetic disk memory. The memory 1420 may be configured to store an instruction used to implement the related method provided in the embodiment of this application. It can be understood that the executable instruction may be programmed or loaded to at least one of the processor 1410 of the network element 1400, a buffer, and a cache. In a specific embodiment, the memory is configured to store computer executable program code. When the program code includes an instruction, and the processor executes the instruction, the instruction causes the network element to perform the following operations:

receiving channel training period indication information sent by a base station, where the channel training period indication information includes any one of a start time of a channel training period, channel training duration of the channel training period, and an end time of the channel training period; and

determining, by the mobile station, a location of the channel training period in a subframe based on the channel training period indication information, to perform channel training within the channel training period.

Duration of the subframe is fixed, and duration of a frame including the subframe is fixed. The frame includes a fixed quantity of subframes. A sum of duration of all the subframes in the frame is equal to the duration of the frame.

For a specific implementation of the operations performed by the processor included in the network element serving as the MS, refer to corresponding steps performed by the MS in the apparatus embodiment. Details are not described in this embodiment of this application.

An embodiment of this application further provides a computer storage medium, configured to store computer software instructions used by the user equipment. The computer software instruction includes a program designed for executing the foregoing aspects.

An embodiment of this application further provides a computer storage medium, configured to store computer software instructions used by the network device. The computer software instruction includes a program designed for executing the foregoing aspects.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended to describe the technical solutions of this application but not to limit this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of this application.

**Claims**

1. A channel training method, comprising:

   sending, by a base station, channel training period indication information to a mobile station, wherein the channel training period indication information comprises any one of a start time of a channel training period, channel training duration of the channel training period, and an end time of the channel training period, and the channel training period indication information is used by the mobile station to determine a location of the channel training period in a subframe or a timeslot based on the channel training period indication information, to perform channel training.

2. The method according to claim 1, wherein the channel training period comprises at least one channel training period, and the method further comprises:

   allocating, by the base station, the at least one channel training period to the mobile station, wherein duration of each channel training period in the subframe or the timeslot is preset duration; and
   generating, by the base station, the channel training period indication information based on a start time of each channel training period, wherein the channel training period indication information comprises a start time of the at least one channel training period; or
   generating, by the base station, the channel training period indication information based on an end time of each channel training period, wherein the channel training period indication information comprises an end time of the at least one channel training period.

3. The method according to claim 1, wherein the channel training period comprises at least one channel training period, and the method further comprises:

   allocating, by the base station, the at least one channel training period to the mobile station, wherein a start time of each channel training period is the same as a start time of the subframe or the timeslot in which the channel training period is comprised or an end time of a guard period; and
   generating, by the base station, the channel training period indication information based on channel training duration of each channel training period, wherein the channel training period indication information comprises channel training duration of the at least one channel training period.

4. The method according to claim 1, wherein the channel training period comprises at least one channel training period, and the method further comprises:

   allocating, by the base station, the at least one channel training period to the mobile station, wherein an end time of each channel training period is the same as an end time of the subframe or the timeslot in which the channel training time is comprised; and

generating, by the base station, the channel training period indication information based on channel training duration of each channel training period, wherein the channel training period indication information comprises channel training duration of the at least one channel training period.

5. The method according to any one of claims 2 to 4, wherein the method further comprises:

sending, by the base station, subframe indication information to the mobile station, wherein the subframe indication information is used to indicate a location of the subframe or the timeslot in which the at least one channel training period is comprised.

6. The method according to any one of claims 1 to 4, wherein the method further comprises:

receiving, by the base station, channel state information sent by the mobile station, wherein the channel state information comprises at least one of a receive power, a receive signal-to-noise ratio, and a receive signal to interference plus noise ratio; and

allocating, by the base station based on the channel state information, the channel training period to the mobile station to perform channel training.

7. The method according to any one of claims 1 to 4, wherein the method further comprises:

receiving, by the base station, channel training request information sent by the mobile station, wherein the channel training request information is used to indicate that the mobile station needs to perform channel training; and

allocating, by the base station based on the channel training request information, the channel training period to the mobile station to perform channel training.

8. A channel training method, comprising:

receiving, by a mobile station, channel training period indication information sent by a base station, wherein the channel training period indication information comprises any one of a start time of a channel training period, channel training duration of the channel training period, and an end time of the channel training period; and

determining, by the mobile station, a location of the channel training period in a subframe or a timeslot based on the channel training period indication information, to perform channel training.

9. The method according to claim 8, wherein the channel training period comprises at least one channel training period, and if the channel training period indication information comprises a start time of the at least one channel training period,

the determining, by the mobile station, a location of the channel training period in a subframe or a timeslot based on the channel training period indication information comprises:

determining, by the mobile station, the location of the channel training period in the subframe or the timeslot based on a start time and preset duration of each channel training period.

10. The method according to claim 8, wherein the channel training period comprises at least one channel training period, and if the channel training period indication information comprises channel training duration of the at least one channel training period,

the determining, by the mobile station, a location of the channel training period in a subframe or a timeslot based on the channel training period indication information comprises:

determining, by the mobile station, the location of the channel training period in the subframe or the timeslot based on channel training duration of each channel training period and a start time of the subframe or the timeslot or an end time of a guard period.

11. The method according to claim 8, wherein the channel training period comprises at least one channel training period, and if the channel training period indication information comprises channel training duration of the at least one channel training period,

the determining, by the mobile station, a location of the channel training period in a subframe or a timeslot based on the channel training period indication information comprises:

determining, by the mobile station, the location of the channel training period in the subframe or the timeslot based on channel training duration of each channel training period and an end time of the subframe or the timeslot.

12. The method according to claim 8, wherein the channel training period comprises at least one channel training period, and if the channel training period indication information comprises an end time of the at least one channel training period,

the determining, by the mobile station, a location of the channel training period in a subframe or a timeslot based on the channel training period indication information comprises:

determining, by the mobile station, the location of the channel training period in the subframe or the timeslot based on an end time and preset duration of each channel training period.

13. The method according to any one of claims 9 to 12, wherein the method further comprises:

receiving, by the mobile station, subframe indication information sent by the base station; and
determining, by the mobile station based on the subframe indication information, a location of the subframe or the timeslot in which the at least one channel training period is comprised.

14. A base station, comprising:

a sending module, configured to send channel training period indication information generated by a processing module to a mobile station, wherein the channel training period indication information comprises any one of a start time of a channel training period, channel training duration of the channel training period, and an end time of the channel training period, and the channel training period indication information is used by the mobile station to determine a location of the channel training period in a subframe or a timeslot based on the channel training period indication information, to perform channel training.

15. The base station according to claim 14, wherein the channel training period comprises at least one channel training period, and the processing module is specifically configured to:

allocate the at least one channel training period to the mobile station, wherein duration of each channel training period in the subframe or the timeslot is preset duration; and
generate the channel training period indication information based on a start time of each channel training period, wherein the channel training period indication information comprises a start time of the at least one channel training period; or
generate the channel training period indication information based on an end time of each channel training period, wherein the channel training period indication information comprises an end time of the at least one channel training period.

16. The base station according to claim 14, wherein the channel training period comprises at least one channel training period, and the processing module is specifically configured to:

allocate the at least one channel training period to the mobile station, wherein a start time of each channel training period is the same as a start time of the subframe or the timeslot in which the channel training period is comprised or an end time of a guard period; and
generate the channel training period indication information based on channel training duration of each channel training period, wherein the channel training period indication information comprises channel training duration of the at least one channel training period.

17. The base station according to claim 14, wherein the channel training period comprises at least one channel training period, and the processing module is specifically configured to:

allocate the at least one channel training period to the mobile station, wherein an end time of each channel training period is the same as an end time of the subframe or the timeslot in which the channel training time is comprised; and

generate the channel training period indication information based on channel training duration of each channel training period, wherein the channel training period indication information comprises channel training duration of the at least one channel training period.

18. The base station according to any one of claims 15 to 17, wherein the sending module is further configured to:

send subframe indication information to the mobile station, wherein the subframe indication information is used to indicate a location of the subframe or the timeslot in which the at least one channel training period is comprised.

19. The base station according to any one of claims 14 to 17, wherein the base station further comprises a receiving module;
the receiving module is configured to receive channel state information sent by the mobile station, wherein the channel state information comprises at least one of a receive power, a receive signal-to-noise ratio, and a receive signal to interference plus noise ratio; and
the processing module is further configured to allocate, based on the channel state information, the channel training period to the mobile station to perform channel training.

20. The base station according to any one of claims 14 to 17, wherein the base station further comprises a receiving module;
the receiving module is configured to receive channel training request information sent by the mobile station, wherein the channel training request information is used to indicate that the mobile station needs to perform channel training; and
the processing module is further configured to allocate, based on the channel training request information, the channel training period to the mobile station to perform channel training.

21. A mobile station, comprising:

a receiving module, configured to receive channel training period indication information sent by a base station, wherein the channel training period indication information comprises any one of a start time of a channel training period, channel training duration of the channel training period, and an end time of the channel training period; and
a processing module, configured to determine a location of the channel training period in a subframe or a timeslot based on the channel training period indication information, to perform channel training.

22. The mobile station according to claim 21, wherein the channel training period comprises at least one channel training period, and if the channel training period indication information comprises a start time of the at least one channel training period,
that the processing module is configured to determine, a location of the channel training period in a subframe or a timeslot based on the channel training period indication information comprises:

determining the location of the channel training period in the subframe or the timeslot based on a start time and preset duration of each channel training period.

23. The mobile station according to claim 21, wherein the channel training period comprises at least one channel training period, and if the channel training period indication information comprises channel training duration of the at least one channel training period,
that the processing module is configured to determine, a location of the channel training period in a subframe or a timeslot based on the channel training period indication information comprises:

determining the location of the channel training period in the subframe or the timeslot based on channel training duration of each channel training period and a start time of the subframe or the timeslot or an end time of a guard period.

24. The mobile station according to claim 21, wherein the channel training period comprises at least one channel training period, and if the channel training period indication information comprises channel training duration of the at least one channel training period,
that the processing module is configured to determine, a location of the channel training period in a subframe or a timeslot based on the channel training period indication information comprises:

determining the location of the channel training period in the subframe or the timeslot based on channel training duration of each channel training period and an end time of the subframe or the timeslot.

25. The mobile station according to claim 21, wherein the channel training period comprises at least one channel training period, and if the channel training period indication information comprises an end time of the at least one channel training period,

that the processing module is configured to determine, a location of the channel training period in a subframe or a timeslot based on the channel training period indication information comprises:

determining the location of the channel training period in the subframe or the timeslot based on an end time and preset duration of each channel training period.

26. The mobile station according to any one of claims 22 to 25, wherein the receiving module is further configured to receive subframe indication information sent by the base station; and

the processing module is further configured to determine, based on the subframe indication information, a location of the subframe or the timeslot in which the at least one channel training period is comprised.

FIG. 1

FIG. 2A

Frame

| #1 | #2 | ... | #K |

Subframe

| #1 | #2 | ... | #M |

Timeslot

| #0 | #1 | ... | #N |

Symbol
time

FIG. 2B

| A base station sends channel training period indication information to a mobile station | Step 101 |

| The mobile station determines a location of a channel training period in a subframe based on the channel training period indication information | Step 102 |

| The base station sends training information to the mobile station within the channel training period, so that channel training is performed within the channel training period | Step 103 |

FIG. 3

| Mobile station | | Base station |
|---|---|---|

Step 201: A mobile station sends channel feedback information to a base station

Step 202: The base station allocates at least one channel training period to the mobile station, and generates channel training period indication information based on channel training duration of each channel training period or an end time of each channel training period

Step 203: The base station sends the channel training period indication information to the mobile station

Step 204: The mobile station determines a location of the channel training period in a subframe based on channel training duration of each channel training period and a start time of the subframe or an end time of a guard period, to perform channel training within the channel training period

Step 204': The mobile station determines a location of the channel training period in a subframe based on an end time of each channel training period and a start time of the subframe or an end time of a guard period, to perform channel training within the channel training period

FIG. 4

Subframe 1    Subframe 2              Subframe K

TP | DTI | TP | DTI | ... | TP | DTI

$\Delta_1$    $\Delta_2$              $\Delta_K$

$t_{1,s}$    $t_{1,e}$    $t_{2,s}$    $t_{2,e}$    $t_{K,s}$    $t_{K,e}$

FIG. 5A

Timeslot 1    Timeslot 2              Timeslot M

TP | DTI | TP | DTI | ... | TP | DTI

$\Delta_1$    $\Delta_2$              $\Delta_K$

$t_{1,s}$    $t_{1,e}$    $t_{2,s}$    $t_{2,e}$    $t_{M,s}$    $t_{M,e}$

FIG. 5B

Subframe 1    Subframe 2              Subframe K

TP | DTI | GP | TP | DTI | ... | TP | DTI

$\Delta_1$    $\Delta_2$              $\Delta_K$

$t_{1,s}$    $t_{1,e}$    $t_{2,s}$    $t_{2,e}$    $t_{M,s}$    $t_{M,e}$

FIG. 6A

Timeslot 1    Timeslot 2              Timeslot K

TP | DTI | GP | TP | DTI | ... | TP | DTI

$\Delta_1$    $\Delta_2$              $\Delta_K$

$t_{1,s}$    $t_{1,e}$    $t_{2,s}$    $t_{2,e}$    $t_{M,s}$    $t_{M,e}$

FIG. 6B

| Mobile station | | Base station |

Step 301: A mobile station sends channel feedback information to a base station

Step 302: The base station allocates at least one channel training period to the mobile station, and generates channel training period indication information based on channel training duration of each channel training period or a start time of each channel training period

Step 303: The base station sends the channel training period indication information to the mobile station

Step 304: The mobile station determines a location of the channel training period in a subframe based on the channel training duration of each channel training period and an end time of the subframe, to perform channel training within the channel training period

Step 304' The mobile station determines a location of the channel training period in a subframe based on the start time of each channel training period and an end time of the subframe, to perform channel training within the channel training period

FIG. 7

Subframe1  Subframe 2  Subframe K

| DTI | TP | DTI | TP | ... | DTI | TP |

$\Delta_1$  $\Delta_2$  $\Delta_K$

$t_{1,s}$  $t_{1,e}$  $t_{2,s}$  $t_{2,e}$  $t_{K,s}$  $t_{K,e}$

FIG. 8A

Timeslot 1  Timeslot 2  Timeslot N

| DTI | TP | DTI | TP | ... | DTI | TP |

$\Delta_1$  $\Delta_2$  $\Delta_N$

$t_{1,s}$  $t_{1,e}$  $t_{2,s}$  $t_{2,e}$  $t_{N,s}$  $t_{N,e}$

FIG. 8B

Mobile station

Base station

Step 401: A mobile station sends channel
feedback information to a base station

Step 402: The base station allocates at
least one channel training period to the
mobile station, and generates channel
training period indication information
based on a start time of each channel
training period or an end time of each
channel training period

Step 403: The base station sends the channel
training period indication information to the
mobile station

Step 404: The mobile station
determines a location of the channel
training period in a subframe based on
the start time and preset duration of
each channel training period, to
perform channel training within the
channel training period

Step 404': The mobile station
determines a location of the channel
training period in a subframe based on
the end time and preset duration of
each channel training period, to
perform channel training within the
channel training period

FIG. 9

FIG. 10A

FIG. 10B

FIG. 11

FIG. 12

1300

Antenna 1340

| Processor 1310 | Transmitter 1332 | Receiver 1334 | Transceiver 1330 |

Memory 1320

User interface 1360

Bus 1350

FIG. 13

1400

Antenna 1440

| Processor 1410 | Transmitter 1432 | Receiver 1434 | Transceiver 1430 |

Memory 1420

User interface 1460

Bus 1450

FIG. 14

## INTERNATIONAL SEARCH REPORT

| International application No. |
| --- |
| PCT/CN2017/081728 |

**A. CLASSIFICATION OF SUBJECT MATTER**

H04W 72/04 (2009.01) i

According to International Patent Classification (IPC) or to both national classification and IPC

**B. FIELDS SEARCHED**

Minimum documentation searched (classification system followed by classification symbols)

H04W; H04Q; H04B; H04J; H04K

Documentation searched other than minimum documentation to the extent that such documents are included in the fields searched

Electronic data base consulted during the international search (name of data base and, where practicable, search terms used)

CNKI, CNPAT, WPI, EPODOC, IEEE: beam, form+, beamform+, channel, training, time, start+, end+, continue, duration, length, time length, period, indicat+

**C. DOCUMENTS CONSIDERED TO BE RELEVANT**

| Category* | Citation of document, with indication, where appropriate, of the relevant passages | Relevant to claim No. |
| --- | --- | --- |
| X | CN 105052235 A (INTERDIGITAL PATENT HOLDINGS, INC.) 11 November 2015 (11.11.2015) description, paragraphs [0046]-[0059], and figure 6 | 1-26 |
| A | CN 102396164 A (MARVELL INTERNATIONAL TRADE CO., LTD.) 28 March 2012 (28.03.2012) the whole document | 1-26 |
| A | CN 102326339 A (SONY CORPORATION) 18 January 2012 (18.01.2012) the whole document | 1-26 |
| A | CN 102124662 A (QUALCOMM INCORPORATED) 13 July 2011 (13.07.2011) the whole document | 1-26 |
| A | US 2009323847 A1 (CISCO TECHNOLOGY, INC.) 31 December 2009 (31.12.2009) the whole document | 1-26 |

☐ Further documents are listed in the continuation of Box C. ☒ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"document member of the same patent family |

| Date of the actual completion of the international search | Date of mailing of the international search report |
| --- | --- |
| 15 June 2017 | 30 June 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LIU, Jiong<br><br>Telephone No. (86-10) 61648261 |

Form PCT/ISA /210 (second sheet) (July 2009)

## INTERNATIONAL SEARCH REPORT
Information on patent family members

International application No.

PCT/CN2017/081728

| Patent Documents referred in the Report | Publication Date | Patent Family | Publication Date |
|---|---|---|---|
| CN 105052235 A | 11 November 2015 | US 2016044711 A1 | 11 February 2016 |
| | | EP 2974494 A1 | 20 January 2016 |
| | | TW 201503735 A | 16 January 2015 |
| | | HK 1220849 A1 | 12 May 2017 |
| | | WO 2014151951 A1 | 25 September 2014 |
| CN 102396164 A | 28 March 2012 | EP 2420007 A1 | 22 February 2012 |
| | | US 2014314053 A1 | 23 October 2014 |
| | | US 2010265925 A1 | 21 October 2010 |
| | | KR 20120005461 A | 16 January 2012 |
| | | WO 2010121155 A1 | 21 October 2010 |
| | | JP 2012524459 A | 11 October 2012 |
| CN 102326339 A | 18 January 2012 | EP 2403158 A1 | 04 January 2012 |
| | | US 2012122392 A1 | 17 May 2012 |
| | | JP 2010200030 A | 09 September 2010 |
| | | WO 2010098147 A1 | 02 September 2010 |
| CN 102124662 A | 13 July 2011 | KR 20110076885 A | 06 July 2011 |
| | | EP 2342835 A1 | 13 July 2011 |
| | | US 2010046457 A1 | 25 February 2010 |
| | | TW 201021603 A | 01 June 2010 |
| | | WO 2010022255 A1 | 25 February 2010 |
| | | JP 2012500605 A | 05 January 2012 |
| | | IN CHENP201100659 E | 09 December 2011 |
| US 2009323847 A1 | 31 December 2009 | WO 2010002491 A1 | 07 January 2010 |
| | | US 2009322614 A1 | 31 December 2009 |